# EUROPEAN PATENT SPECIFICATION

(11) **EP 4 228 140 B1**
(45) Date of publication and mention of the grant of the patent: **18.03.2026**
(21) Application number: 21877561.7
(22) Date of filing: 04.10.2021
(51) Int. Cl.: H02M 7/483, H02M 7/06

(54) **POWER CONVERSION DEVICE**
LEISTUNGSWANDLER
DISPOSITIF DE CONVERSION DE PUISSANCE

(30) Priority: 05.10.2020 JP 2020168285
(43) Date of publication of application: 16.08.2023
(73) Proprietor: Toshiba Carrier Corporation, Kawasaki-shi, Kanagawa 212-8585 (JP)
(72) Inventor: ARAI, Takuro, Kawasaki-shi, Kanagawa 212-0013 (JP); MOCHIKAWA, Hiroshi, Kawasaki-shi, Kanagawa 212-0013 (JP); KUBOTA, Yohei, Fuji-shi, Shizuoka 416-8521 (JP); KANAMORI, Masaki, Fuji-shi, Shizuoka 416-8521 (JP); ISHIDA, Keiichi, Fuji-shi, Shizuoka 416-8521 (JP); NUKUSHINA, Harunobu, Fuji-shi, Shizuoka 416-8521 (JP)
(74) Representative: Gramm, Lins & Partner Patent- und Rechtsanwälte PartGmbB
(86) International application number: PCT/JP2021/036629
(87) International publication number: WO 2022/075262

(56) References cited:
- EP-A1- 3 614 553
- WO-A1-2016/203517
- JP-A- 2013 027 260
- US-A1- 2019 157 968
- YUE LU ET AL: "Sub-Modular Circuit Design for Self-Balancing Series-Connected IGBTs in a Modular Multilevel Converter", 2019 IEEE APPLIED POWER ELECTRONICS CONFERENCE AND EXPOSITION (APEC), IEEE, 17 March 2019 (2019-03-17), pages 3448 - 3452, XP033555311, DOI: 10.1109/APEC.2019.8722282

## Description

### Technical Field

Embodiments of the present invention relate to a power conversion apparatus comprising a multilevel converter formed by serially connecting a plurality of unit converters.

### Background Art

Development and practical use of a modular multilevel converter (MMC) has progressed as a power converter which generates and outputs an AC voltage for harmonic suppression by making serial connection (cascade connection) of a plurality of unit converters (also referred to as bridge cells or chopper cells) each outputting a plurality of levels (multilevel) of DC voltages and summing output voltages of the unit converters. By supplying the output of this modular multilevel converter (simply referred to as a multilevel converter) to a grid line, harmonics flowing in the grid line can be suppressed.

Each unit converter of the multilevel converter includes a pair of output terminals, a plurality of switch elements, a capacitor connected to each of the output terminals via these switch elements, a drive unit which drives each of the above switch elements, a voltage detection unit which detects the voltage of the above capacitor, and the like, and selectively outputs the DC voltages of the plurality of levels by on and off operations of each of the above switch elements.

### Citation List

### Non Patent Literature

Non Patent Literature 1: "PWM Control Method and Operation Verification of Modular Multilevel Converter (MMC)", by Makoto Hagiwara and Yasufumi Akagi, IEEJ Transactions D, Vol. 128, No. 7, 2008;

Yue Lu et Al "Sub-Modular Circuit Design for Self-Balancing Series-Connected IGBTs in a Modular Multilevel Converter", 2019 IEEE Applied Power Electronics Conference and Exposition (APEC), IEEE, 17 March 2019, (2019-03-17), pages 3448-3452 .

### Patent Literature

Prior art according to the preamble of claim 1 is disclosed in US 2019/157 968 A1. Additional prior art is disclosed in 3 614 553 A1, and JP 5378274 B.

### Summary of Invention

### Technical Problem

Since the above power conversion apparatus comprises a large number of unit converters, how to secure operating voltages for the drive unit and the voltage detection unit in each of the unit converters is a major problem in simplifying the configuration and reducing the costs.

Embodiments described herein aim to provide a power conversion apparatus capable of appropriately securing operation voltages of the drive unit and the voltage detection unit in each of the unit converters of a multilevel converter, thereby simplifying the configuration and reducing the costs.

### Solution to Problem

The invention is defined by the features of the independent claims. Preferred embodiments, not mandatory for the invention, are included in the dependent claims.

### Brief Description of Drawings

FIG. 1 a block diagram showing a configuration of an embodiment.
FIG. 2 is a diagram showing a configuration of each of unit converters in the embodiment.
FIG. 3 is a diagram showing a switching pattern in the embodiment.
FIG. 4 is a diagram showing PWM control in the embodiment.
FIG. 5 is a diagram showing an example of a configuration of a self-sufficient power supply unit in the embodiment.
FIG. 6 is a diagram showing another example of the configuration of the self-sufficient power supply unit in the embodiment.
FIG. 7 is a diagram showing a configuration of a modified example of each unit converter in the embodiment.
FIG. 8 is a diagram showing a configuration of a modified example of each multilevel converter in the embodiment.

### Mode for Carrying Out the Invention

An embodiment of the present invention will be described hereinafter with reference to the accompanying drawings.

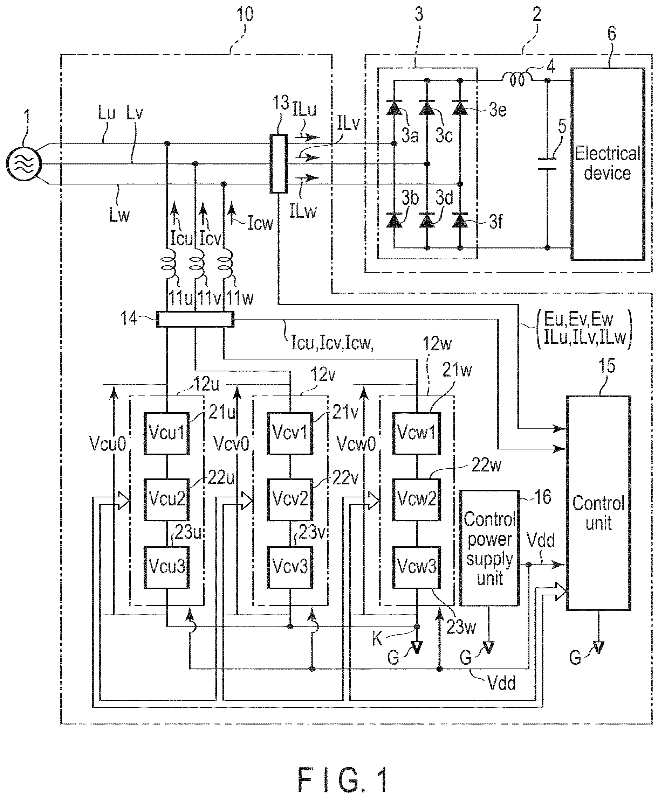

As shown in FIG. 1, a load 2 is connected to the grid lines Lu, Lv, and Lw of a three-phase AC grid (including a power grid or a distribution grid) 1 via the power conversion apparatus 10 of the present embodiment. The load 2 is a three-phase rectifier circuit 3 formed by bridge connection of diodes 3a to 3f, a DC capacitor 5 connected to an output end of this three-phase rectifier circuit 3 via a DC reactor 4, and an electrical device 6 connected to this DC capacitor 5. The electrical device 6 is, for example, an inverter which drives a motor.

The power conversion apparatus 10 includes buffer reactors 11u, 11v, and 11w, multilevel converters (first, second, and third multilevel converters) 12u, 12v, and 12w having one-side ends connected to the grid lines Lu, Lv, and Lw via the buffer reactors 11u, 11v, and 11w, respectively, and having the other side ends interconnected (star-connected), a detector 13 located at a position on the load 2 side from the connection position of the buffer reactors 11u, 11v, and 11w in the above grid lines Lu, Lv, and Lw to detect AC voltages (also referred to as grid voltages) Eu, Ev, and Ew of the three-phase AC grid 1 and currents (referred to as load currents) ILu, ILv, and ILw flowing to the load 2, a detector 14 arranged in current paths between the buffer reactors 11u, 11v, and 11w and the multilevel converters 12u, 12v, and 12w to detect compensation currents (also referred to as output currents) Icu, Icv, and Icw supplied from the multilevel converters 12u, 12v, and 12w to the grid lines Lu, Lv, and Lw (also referred to as main circuits), a control unit 15 which controls the multilevel converters 12u, 12v, and 12w in accordance with detection results of the detectors 13 and 14, and a control power supply unit 16 which outputs a DC voltage (referred to as an operating voltage) Vdd necessary for the operation of the control unit 15. This operating voltage Vdd is, for example, 5V or 15V, and is also used as the operating voltage for voltage detection units 34, 44, and 54 to be described later in the multilevel converters 12u, 12v, and 12w.

A terminal of a common potential G, which is the reference for the output voltage of the control power supply unit 16, is connected to, for example, a neutral point K, which is interconnected (star-connected) with the other ends of the multilevel converters 12u, 12v, and 12w. In addition, the terminal of the common potential G may also be connected to a negative terminal of the DC capacitor 5 for further voltage clamp.

The multilevel converter 12u connected to the grid line Lu is a so-called multiseries converter cluster configured by making series connection of a plurality of first to N-th unit converters (first unit converters; also referred to as chopper cells, bridge cells or PWM converters) 21u, 22u, and 23u, each selectively generating and outputting a plurality of levels (multilevel) of DC voltages by switching, and generates and outputs an AC voltage Vcu0 to reduce harmonics by summing output voltages (cell output voltages) Vcu1, Vcu2, and Vcu3 of the unit converters 21u, 22u, and 23u. In the present embodiment, an example in which the number of unit converters is three is described. The multilevel converters 12v and 12w which are connected to the grid lines Lv and Lw, respectively, have the same configuration as the multilevel converter 12u.

The control unit 15 calculates the compensation currents Icu, Icv, and Icw which are to be added to the load currents ILu, ILv, and ILw, respectively, in order to make the load currents ILu, ILv, and ILw as close to a sine wave synchronized with the AC voltages Eu, Ev, and Ew as possible. Furthermore, the control unit 15 calculates AC voltages Vcu0, Vcv0, and Vcw0 required to supply the calculated compensation currents Icu, Icv, and Icw, and determines the output voltages Vcu1, Vcu2, and Vcu3 of the unit converters 21u, 22u, and 23u to obtain the AC voltage Vcu0. Then, the control unit 15 controls the operation of each of the unit converter 21u, 22u, 23u, 21v, 22v, 23v, 21w, 22w, and 23w to obtain the determined output voltages Vcu1, Vcu2, and Vcu3.

In general, in a multilevel converter connected to a three-phase AC grid 1, the output voltages Vcu0, Vcv0, and Vcw0 calculated as described above have a waveform substantially similar to a sine wave.

The multilevel converter 12v is a multiseries converter cluster formed by serially connecting a plurality of unit converters (second converters) 21v, 22v, and 23v each selectively generating and outputting a plurality of levels (multilevel) of DC voltages by switching, and generates and outputs the AC voltage Vcv0 having a waveform similar to a sine wave to reduce harmonics by summing the output voltages (cell output voltages) Vcv1, Vcv2, and Vcv3 of the unit converters 21v, 22v, and 23v.

The multilevel converter 12w is a multiseries converter cluster formed by serially connecting a plurality of unit converters (third converters) 21w, 22w, and 23w each selectively generating and outputting a plurality of levels (multilevel) of DC voltages by switching, and generates and outputs the AC voltage Vcv0 having a waveform similar to a sine wave to reduce harmonics by summing the output voltages (cell output voltages) Vcw1, Vcw2, and Vcw3 of the unit converters 21w, 22w, and 23w.

The AC voltages Vcu0, Vcv0, and Vcw0 are supplied from the multilevel converters 12u, 12v, and 12w to the grid lines Lu, Lv, and Lw, and it is thereby possible to compensate for and suppress harmonics included in the load currents ILu, ILv, and ILw.

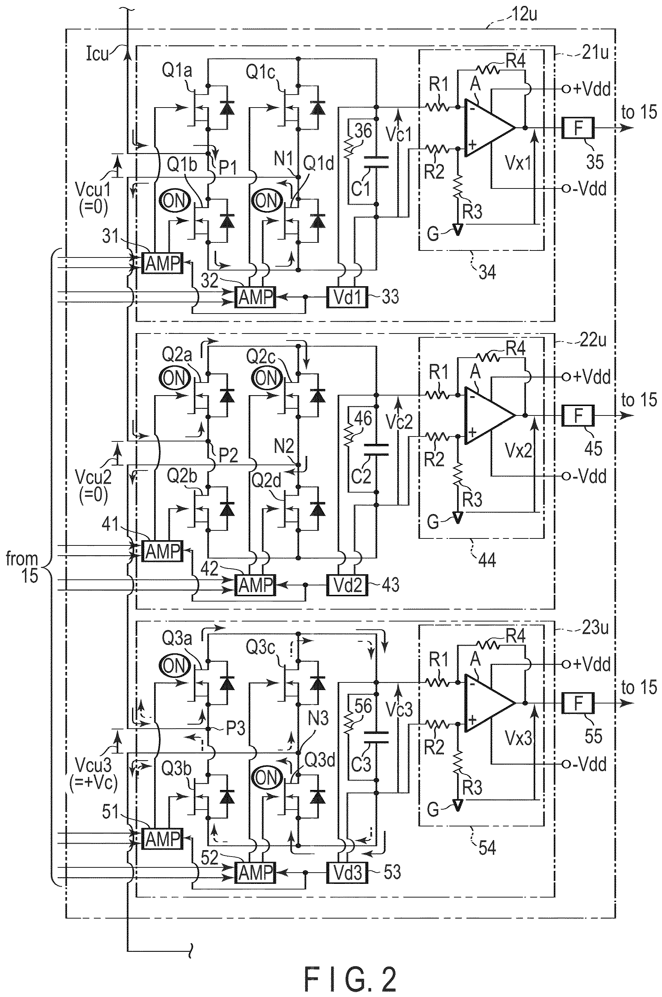

A circuit configuration of the unit converters 21u, 22u, and 23u is shown in FIG. 2.

The unit converter 21u includes a first switching leg formed by making serial connection of an output terminal (first output terminal) P1, an output terminal (second output terminal) N1, a switch element (first switch element) Q1a, and a switch element (second switch element) Q1b, a second switching leg formed by making serial connection of a switch element (third switch element) Q1c and a switch element (fourth switch element) Q1d and connected parallel to the first switching leg, a capacitor C1 connected to the output terminals P1 and N1 via these switch elements Q1a to Q1d, a drive unit (gate amplifier) 31 which drives on and off operations of the switch elements Q1a and Q1b in response to a drive signal from the control unit 15, a drive unit 32 which drives on and off operations of the switch elements Q1c and Q1d in response to the drive signal from the control unit 15, a self-sufficient power supply unit 33 which converts a voltage (referred to as a capacitor voltage) Vc1 of the capacitor C1 into a DC voltage (referred to as an operating voltage) required for the operations of the drive units 31 and 32, and a voltage detection unit 34 which operates with an operating voltage Vdd output from the control power supply unit 16 to detect the capacitor voltage Vc1, and generates and outputs a DC voltage Vcu1 of a plurality of levels (positive level, zero level, and negative level) by selectively forming a plurality of current paths by the on and off operations of the switch elements Q1a to Q1d.

The unit converter 22u includes a first switching leg formed by making serial connection of an output terminal (first output terminal) P2, an output terminal (second output terminal) N2, a switch element (first switch element) Q2a, and a switch element (second switch element) Q2b, a second switching leg formed by making serial connection of a switch element (third switch element) Q2c and a switch element (fourth switch element) Q2d and connected parallel to the first switching leg, a capacitor C2 connected to the output terminals P2 and N2 via these switch elements Q2a to Q2d, a drive unit (gate amplifier) 41 which drives on and off operations of the switch elements Q2a and Q2b in response to the drive signal from the control unit 15, a drive unit 42 which drives on and off operations of the switch elements Q2c and Q2d in response to the drive signal from the control unit 15, a self-sufficient power supply unit 43 which converts a voltage (referred to as a capacitor voltage) Vc2 of the capacitor C2 into a DC voltage (referred to as an operating voltage) required for the operations of the drive units 41 and 42, and a voltage detection unit 44 which operates with the operating voltage Vdd output from the control power supply unit 16 to detect the capacitor voltage Vc2, and generates and outputs a DC voltage Vcu2 of a plurality of levels (positive level, zero level, and negative level) by selectively forming a plurality of current paths by the on and off operations of the switch elements Q2a to Q2d.

The unit converter 23u includes a first switching leg formed by making serial connection of an output terminal (first output terminal) P3, an output terminal (second output terminal) N3, a switch element (first switch element) Q3a, and a switch element (second switch element) Q3b, a second switching leg formed by making serial connection of a switch element (third switch element) Q3c and a switch element (fourth switch element) Q3d and connected parallel to the first switching leg, a capacitor C3 connected to the output terminals P3 and N3 via these switch elements Q3a to Q3d, a drive unit (gate amplifier) 51 which drives on and off operations of the switch elements Q3a and Q3b in response to a drive signal from the control unit 15, a drive unit 52 which drives on and off operations of the switch elements Q3c and Q3d in response to the drive signal from the control unit 15, a self-sufficient power supply unit 53 which converts a voltage (referred to as a capacitor voltage) Vc3 of the capacitor C3 into a DC voltage (referred to as an operating voltage) required for the operations of the drive units 51 and 52, and a voltage detection unit 54 which operates with an operating voltage Vdd output from the control power supply unit 16 to detect the capacitor voltage Vc3, and generates and outputs a DC voltage Vcu3 of a plurality of levels (positive level, zero level, and negative level) by selectively forming a plurality of current paths by the on and off operations of the switch elements Q3a to Q3d.

Incidentally, for example, IGBTs can be used for each of the switch elements Q1a to Q3d of the unit converters 21u, 22u, and 23u.

There are a first current path, a second current path, and a third current path as a plurality of current paths formed by the on and off operations of the switch elements Q1a to Q1d in the unit converter 21u. Similarly, there are a first current path, a second current path, and a third current path as a plurality of current paths formed by the on and off operations of the switch elements Q2a to Q2d in the unit converter 22u, and there are a first current path, a second current path, and a third current path as a plurality of current paths formed by the on and off operations of the switch elements Q3a to Q3d in the unit converter 23u.

For example, as shown in the unit converter 21u in FIG. 2, in a positive level period of the AC voltage Eu, a first current path which makes an interval between the output terminals P1 and N1 conductive and bypasses the capacitor C1 is formed as represented by a solid arrow, and a zero level cell output voltage Vcu1 (=0) is generated between the output terminals P1 and N1 by the operation of turning on the switch elements Q1b and Q1d and turning off the switch elements Q1a and Q1c.

As shown in the unit converter 22u in FIG. 2, in a positive level period of the AC voltage Eu, a first current path which makes an interval between the output terminals P2 and N2 conductive and bypasses the capacitor C2 is formed as represented by a solid arrow, and a zero level cell output voltage Vcu2 (=0) is generated between the output terminals P2 and N2, by the operation of turning on the switch elements Q2a and Q2c and turning off the switch elements Q2b and Q2d. Either the operation indicated in the unit converter 21u or the operation indicated in the unit converter 22u may be used for the zero level cell output voltage.

As shown in the unit converter 23u in FIG. 2, in a positive level period of the AC voltage Eu, a second current path which makes an interval between the output terminal P3 and an end of the capacitor C3 conductive and makes an interval between the output terminal N3 and the other end of the capacitor C3 conductive is formed as represented by an arrow of a solid line, and a positive level cell output voltage Vcu3 (=+Vc) is generated between the output terminals P3 and N3, by the operation of turning on the switch elements Q3a and Q3d and turning off the switch elements Q3b and Q3c.

As also shown in the unit converter 23u in FIG. 2, in a positive level period of the AC voltage Eu, a third current path which makes an interval between the output terminal N3 and an end of the capacitor C3 conductive and makes an interval between the output terminal P3 and the other end of the capacitor C3 conductive is formed as represented by an allow of a broken line, and a negative level cell output voltage Vcu3 (=-Vc) is generated between the output terminals P3 and N3, by the operation of turning on the switch elements Q3a and Q3d and turning off the switch elements Q3b and Q3c.

The output terminal P1 of the unit converter 21u is connected to the grid line Lu via the above buffer reactor 11u, the output terminal P2 of the unit converter 22u is connected to the output terminal N1 of the unit converter 21u, the output terminal P3 of the unit converter 23u is connected to the output terminal N2 of the unit converter 23u, and the output terminal N3 of the unit converter 23u is interconnected (star-connected) with the other ends of the other multilevel converters 12v and 12w as the other end of the multilevel converter 12u. The voltage Vcu0 formed by summing the cell output voltages Vcul, Vcu2, and Vcu3 of the unit converters 21u, 22u, and 23u is supplied to the grid line Lu by the serial connection (cascade connection) of the unit converters 21u, 22u, and 23u. In the example in FIG. 2, Vcu0 = "0" + "0" + "+Vc" = +Vc.

The unit converter 21u will be described below as an example, but the other unit converters 21v and 21w can also be described in the same manner. Furthermore, each unit converter in the other multilevel converters 12v and 12w also operates in the same manner.

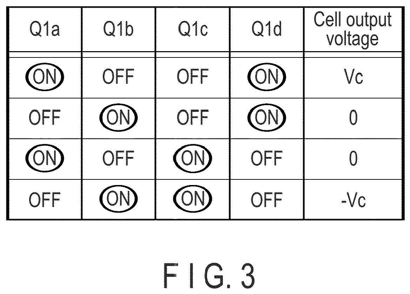

A relationship between the on and off patterns of the switch elements Q1a to Q1d to obtain the plurality of levels (positive level, zero level, and negative level) cell output voltage Vcu1 from the unit converter 21u and the cell output voltage Vcu1 is shown in FIG. 3. To obtain a desired level, pulse width modulation control (PWM control) may be used by means of a triangular modulation wave and a command value signal indicating a target output voltage.

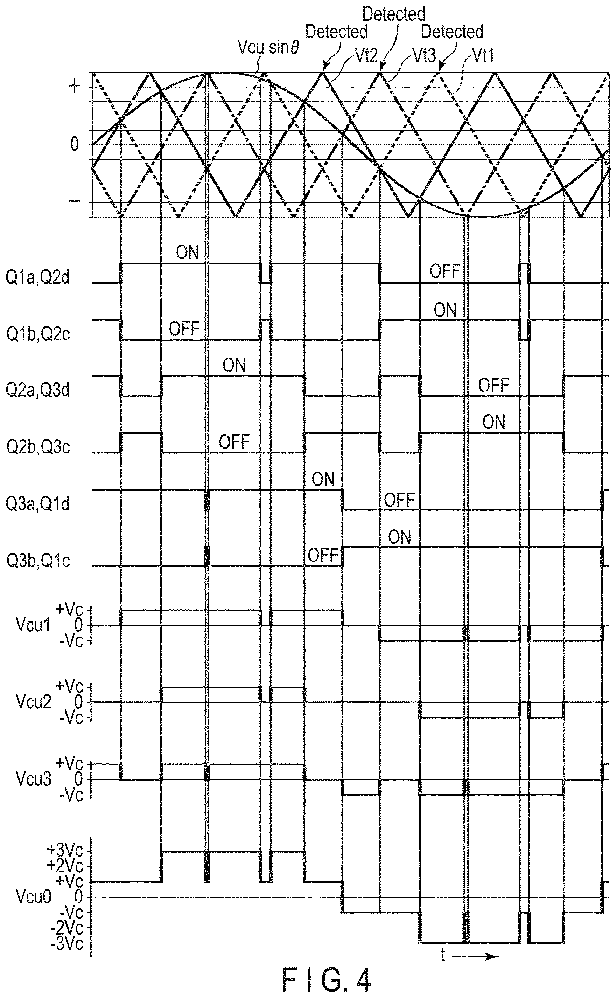

In addition, pulse width modulation control (PWM control) of the control unit 15 for switching using a special modulation method (also referred to as pseudo-three-level modulation) is shown in FIG. 4.

In other words, the control unit 15 sets the AC voltage command value "Vcu sinθ" to cause the multilevel converter 12u to generate an AC voltage having substantially the same waveform as the AC voltage Eu of the three-phase AC grid 1, and generates switching drive signals (also referred to as gate signals) for the switch elements Q1a to Q3d of the unit converters 21u, 22u, and 23u by pulse width modulation that compares the voltage level of the triangular wave-shaped carrier signals Vt1, Vt2, and Vt3 whose number is the same as the number of unit converters 21u, 22u, and 23u and are different in phase from each other, with the voltage level of the AC voltage command value "Vcu sinθ". When generating these drive signals, the control unit 15 secures dead times which set an off state to prevent short circuits between the on and off operations of the switching elements Q1a and Q1b arranged in series in each switching leg of the unit converters 21u, 22u, and 23u, between the on and off operations of the switching elements Q2a and Q2b, and between the on and off operations of the switching elements Q3a and Q3b, respectively.

In addition, the control unit 15 executes balance control to balance the capacitor voltages Vc1, Vc2, and Vc3 in the unit converters 21u, 22u, and 23u. More specifically, the AC voltage command values "Vcu sinθ" are corrected such that an average value of the voltages Vc1 and Vc2 of the capacitors C1 and C2 in the two unit converters 21u and 22u adjacent to each other, an average value of the voltages Vc2 and Vc3 of the capacitors C2 and C3 in the two unit converters 22u and 23u adjacent to each other, and an average value of the voltages Vc3 and Vc1 of the capacitors C3 and C1 in N-th and first two unit converters 23u and 21u, among the unit converters 21u, 22u, and 23u of the multilevel converter 12u, match an average value Vcave of the voltages Vc1, Vc2, and Vc3 of all the capacitors C1, C2, and C3 of the unit converters 21u, 22u, and 23u. Incidentally, phases of the AC voltage command values "Vcu sinθ" which the control unit 15 sets for the three multilevel converters 12u, 12v, and 12w are shifted from each other by 120°.

### [Configuration of self-sufficient power supply unit]

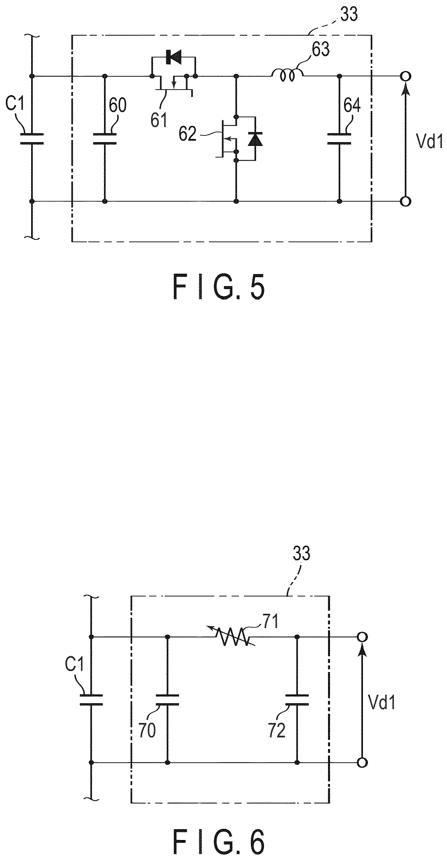

The self-sufficient power supply unit 33 of the unit converter 21u can use a DC-DC converter (also referred to as a chopper circuit) in FIG. 5 or a variable resistance circuit (also referred to as a series regulator) in FIG. 6.

The DC-DC converter in FIG. 5 includes an input capacitor 60, switch elements 61 and 62, a reactor 63, and an output capacitor 64, and converts (steps down) the voltage Vc1 of the capacitor C1 into a DC voltage Vd1 of a predetermined level (for example, 10V) required for the operation of the drive units 31 and 32 by switching. This DC-DC converter has advantages that prices of the component parts are high, but a large amount of power can be used, and an efficiency is high.

In contrast, the variable resistance circuit in FIG. 6 includes an input capacitor 70, a variable resistor 71, and an output capacitor 72, and converts the voltage Vc1 of the capacitor C1 into a predetermined level of DC voltage Vd1 required for the operation of the above drive units 31 and 32 by the variable resistor 71. This variable resistance circuit has advantages that the efficiency is lowered by the power consumption due to resistance, but the configuration is simple and the component prices are low. In general, the variable resistor 71 is composed of a semiconductor device such as a transistor.

A configuration using the DC-DC converter of FIG. 5 and the series circuit of the variable resistance circuit of FIG. 6 as one self-sufficient power supply unit 33 may be adopted to step down the capacitor voltage Vc1 by the DC-DC converter and then convert the voltage into a predetermined level of the DC voltage by the variable resistance circuit.

The self-sufficient power supply units 43 and 53 of the unit converters 22u and 23u are also DC-DC converters or variable resistance circuits that convert the voltages Vc2 and Vc3 of the capacitors C2 and C3 into predetermined levels of DC voltages Vd2 and Vd3 required for the operation of the drive units 41, 42, 51, and 52 by switching.

### [Configuration of drive units]

The drive units 31 and 32 of the unit converter 21u are isolated amplifier circuits (gate amplifiers) including input terminals to which drive signals are input from the control unit 15 and output terminals connected to the gates of the switch elements Q1a to Q1d in a state of being electrically isolated from the input terminals. The drive units 41 and 42 of the unit converter 22u and the drive units 51 and 52 of the unit converter 23u are also isolated amplifier circuits.

The resolution of the drive signals (gate signals) for driving on and off operations, which are supplied from the drive units 31 to 52 to the gate of each switch element, is approximately 1 µs and, accordingly, the drive units 31 to 52 which are gate amplifiers need to have a responsiveness of approximately several MHz. For example, photocouplers and level shifters are used as these drive units 31 to 52.

### [Configuration of voltage detection unit]

The voltage detection unit 34 of the unit converter 21u is a differential amplifier circuit which includes an inverting input terminal (-) connected to one end of the capacitor C1 via a first voltage divider resistor R1, a non-inverting input terminal (+) connected to the other end of the capacitor C1 via a second voltage divider resistor R2 and connected to the common potential G via a third voltage divider resistor R3, and an operational amplifier (referred to as op-amp) having an output terminal connected to the inverting input terminal (-) via a fourth voltage divider resistor R4, and which outputs a voltage Vx1 of a level corresponding to a difference between a potential of the inverting input terminal (-) and a potential of the non-inverting input terminal (+), i.e., to the voltage Vc1 between the both terminals of the capacitor C1 from the operational amplifier A.

Similarly, the voltage detection unit 44 of the unit converter 22u and the voltage detection unit 54 of the unit converter 23u output the voltages Vx2 and Vx3 of levels corresponding to the voltages between both ends of the capacitors C2 and C3 from the operational amplifiers A, respectively.

Each of the operational amplifiers A of the unit converters 21u, 22u, and 23u comprises a positive power supply terminal to which a positive voltage +Vdd based on the operating voltage Vdd output from the control power supply unit 16 shown in FIG. 1 is applied, and a negative power supply terminal to which a negative voltage -Vdd based on the operating voltage Vdd is applied.

If a configuration of providing an offset circuit to remove fluctuations in the potential of the negative power supply terminal is adopted, only the positive voltage +Vdd may be added to the operational amplifier A as the operating voltage.

As described above, since the operating voltage Vdd for the control unit 15 is used for the operating voltages of the voltage detectors 34, 44, and 54 of the unit converters 21u, 22u, and 23u without providing a special power supply while using the capacitor voltages Vc1, Vc2, and Vc2 for the operating voltages of the drive units 31 to 52 of the unit converters 21u, 22u, and 23u, the configuration can be simplified and the costs can be reduced.

Incidentally, in the configuration that the operating voltage Vdd for the control unit 15 is commonly added to each of the operational amplifiers A of the voltage detection units 34, 44, and 54, the potential difference (for example, 50V) between the unit converters 21u, 22u, and 23u is added to each of the operational amplifiers A, which may lead to the destruction of each of the operational amplifiers A. In addition, since the common potential G of the control power supply unit 16, which is the common power supply for each of the operational amplifiers A of the voltage detection units 34, 44, and 54, and the potential of a neutral point K of the multilevel converters 12u, 12v, and 12w, which are main circuits, are the same as each other, the power supply voltage (for example, 200V) of the main circuits is added to each of the operational amplifiers A, which may cause destruction of each of the operational amplifiers A.

To prevent such destruction of each of the operational amplifiers A, this voltage divider resistors R1 and R2 of the voltage detection units 34, 44, and 54, which have large resistance values, are adopted in the present embodiment, to suppress the voltage applied to each of the operational amplifiers A.

In contrast, the potentials at both ends of the capacitors C1, C2, and C3 fluctuate steeply in accordance with the on and off operations of each of the switch elements. It is considered that this potential fluctuation can be removed by each of the voltage divider resistors in the voltage detection units 34, 44, and 54 but, in reality, the steep potential fluctuations occurring at both ends of the capacitors C1, C2, and C3 cannot be completely removed due to influences of variations and errors in the resistance values of each of the voltage divider resistors or the leakage current of each of the operational amplifiers A.

Therefore, in the present embodiment, as shown in FIG. 2, filters 35, 44, and 55 are arranged on respective signal lines between the output terminals of the operational amplifiers A of the voltage detection units 34, 44, and 54 and the control unit 15. The filters 35, 44, and 55 remove, as noise, the steep potential fluctuations of several MHz among the potential fluctuations occurring at the both ends of the capacitors C1, C2, and C3. Thus, it is possible to detect appropriate capacitor voltages Vc1, Vc2, and Vc3 including no errors and inform the control unit 15 of the capacitor voltages.

In addition, as described above, since the common potential G of the control power supply unit 16, which is the common power supply for each of the operational amplifiers A of the voltage detection units 34, 44, and 54, and the neutral point K of the main circuits, which are the multilevel converters 12u, 12v, and 12w, are the same as each other, the capacitors C1, C2, and C3 are connected to the main circuits via voltage divider resistors R2 and R3, respectively. In this situation, if the cell output voltages Vcu1, Vcu2, and Vcu3 of the unit converters 21u, 22u, and 23u are different from each other, the amounts of charges discharged from the capacitors C1, C2, and C3 through the voltage divider resistors R2 and R3 are different from each other. In contrast, a sum of the capacitor voltages Vc1, Vc2, and Vc3 is controlled to be a voltage above a certain level in order to oppose the voltage of the AC grid. Therefore, a situation that the capacitor C1 of the unit converter 21u which exists at a position farthest from the neutral point K, discharges most and the capacitor C3 of the unit converter 21w which exits at a position closest to the neutral point K continues to be charged may occur, and the voltage applied to the capacitor C3 may exceed a rated voltage of capacitor C3.

Therefore, in the present embodiment, discharge resistors 36, 46, and 56 having resistance values smaller than the sum of the resistance values of the voltage divider resistors R2 and R3 are connected in parallel to the capacitors C1, C2, and C3 of the unit converters 21u, 22u, and 23u, respectively. The inconvenience that the voltage applied to the capacitor C3 exceeds the rated voltage of the capacitor C3 can be eliminated and the capacitor voltages Vc1, Vc2, and Vc3 of the respective capacitors C1, C2, and C3 can be made close to each other, by the parallel connection of these discharge resistors 36, 46, and 56.

The unit converter 21u connected to the grid line Lu has been mainly described above in detail, but the unit converters 21v and 21w connected to the grid lines Lv and Lw, respectively, have the same configuration as the above unit converter 21u and execute the same operations.

### [Modified Example 1]

In the above-described embodiment, the filters 35, 44, and 55 are arranged on the respective signal lines between the output terminals of the operational amplifiers A of the voltage detection units 34, 44, and 54 and the control unit 15 in order to remove the steep potential fluctuation occurring at the both ends of the capacitors C1, C2, and C3 but, instead of this, the output signal at the timing when the triangular wave of each of the carrier signals Vt1, Vt2, and Vt3 for pulse width modulation shown in FIG. 4, of the output signals (detection results) of the operational amplifiers A of the voltage detection units 34, 44, and 54, becomes an apex, may be taken in the control unit 15 as a voltage detection result.

Since the capacitor voltages Vc1, Vc2, and Vc3 basically change at the point where the voltage levels of the triangular wave-shaped carrier signals Vt1, Vt2, and Vt3 intersect with the AC voltage command value Vcu sinθ, the change is small at the timing when the triangular wave of each of the carrier signals Vt1, Vt2, and Vt3 becomes an apex. Therefore, if the control unit 15 is configured to take in the output signal at the timing when the triangular wave of each of the carrier signals Vt1, Vt2, and Vt3 becomes an apex, as a voltage detection result, appropriate capacitor voltages Vc1, Vc2, and Vc3 having no errors can be recognized by the control unit 15.

### [Modified Example 2]

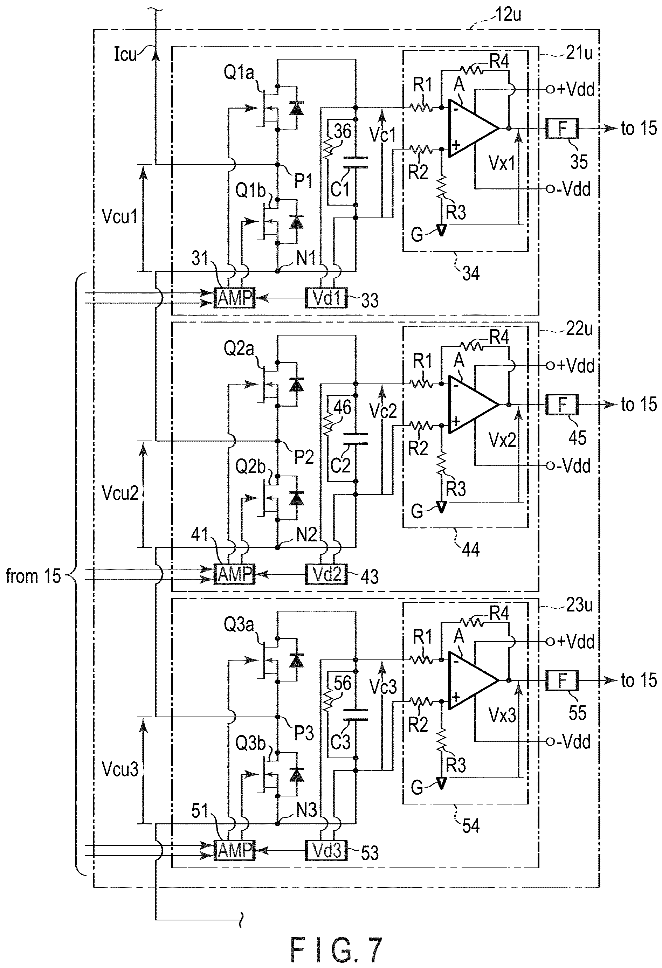

In the above-described embodiment, the case in which each of the unit converters 21u, 22u, and 23u includes four switch elements and two drive units 31 and 32 has been described as an example, but the operation can also be executed in a case in which each of the unit converters 21u, 22u, and 23u includes two switch elements and one drive unit 31 as shown in FIG. 7.

### [Modified Example 3]

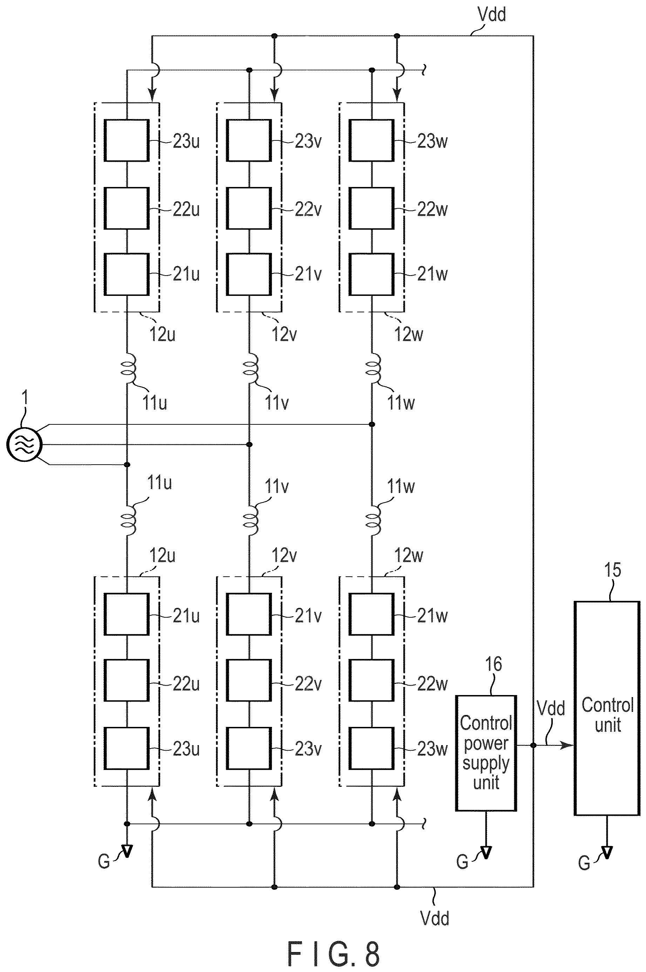

In the above-described embodiment, a power conversion apparatus in which one-side ends of the multilevel converters 12u, 12v, and 12w are connected to the AC grid lines via the buffer reactors 11u, 11v, and 11w and the other ends of the multilevel converters 12u, 12v, and 12w are interconnected (star-connected) has been described, but the operation can also be executed in a power conversion apparatus in which one-side end of each pair of multilevel converters 12u, 12v, and 12w is connected to the AC grid lines via the buffer reactors 11u, 11v, and 11w and the other end of each of the multilevel converters 12u, 12v, and 12w is connected to the DC grid lines as shown in FIG. 8. In this case, the negative side of the DC grid lines is connected to the common potential G.

### Reference Signs List

1... three-phase grid power supply, 2. . . load, 10... power conversion apparatus, 12u, 12v, and 12w... multilevel converters, 15... control unit, 16... control power supply unit, 21u, 22u, and 23u... unit converters, 21v, 22v, and 23v. . . unit converters, 21w, 22w, and 23w. . . unit converters, Q1a to Q3d... switch elements, C1, C2, and C3... capacitors, Gu1 to Gu3'. . . drive signals, grid lines Lu, Lv, and Lw.

## Claims

1. A power conversion apparatus comprising:
multilevel converters (12u, 12v, 12w), each multilevel converter (12u, 12v, 12W)comprising a plurality of unit converters (21u-23u, 21v-23v, 21w-23w) each configured to selectively output a plurality of levels of DC voltages (Vcu1-Vcu3, Vcv1-Vcv3, Vcw1-Vcw3), and to sum and to output output voltages of the unit converters (21u-23u, 21v-23v, 21w-23w);
a control unit (15) configured to control drive of each of the unit converters (21u-23u, 21v-23v, 21w-23w); and
a control power supply unit (16) configured to output an operating voltage (Vdd) of the control unit (15),
each of the unit converters (21u-23u, 21v-23v, 21w-23w) including first and second output terminals (P1, P2, P3, N1, N2, N3), a plurality of switch elements (Q1a-Q1d; Q2a-Q2d, Q3a-Q3d), a capacitor (C1, C2, C3) connected to the first and second output terminals (P1, P2, P3, N1, N2, N3) via the switch elements (Q1a-Q1d; Q2a-Q2d, Q3a-Q3d), drive units (31, 32, 41, 42, 51, 52) configured to operate with a voltage of the capacitor (C1, C2, C3) and to drive on and off operations of each of the switch elements (Q1a-Q1d; Q2a-Q2d, Q3a-Q3d) in accordance with a drive signal from the control unit (15), and a voltage detection unit (24, 44, 54)) configured to detect the voltage (Vc1, Vc2, Vc3) of the capacitor (C1, C2, C3), each multilevel converter (21u-23u, 21v-23v, 21w-23w) being configured to output the plurality of levels of DC voltages by selective formation of a plurality of current paths executed by on and off operations of each of the switch elements (Q1a-Q1d; Q2a-Q2d, Q3a-Q3d),
the control unit (15) is configured to output the drive signal to the drive unit (31, 32, 42, 51, 52), based on a detection result of the voltage detection unit of each of the unit converters (21u- 23u, 21v-23v, 21w-23w)
**characterized in that**
each drive unit (31, 32, 42, 51, 52) is an isolated amplifier circuit including an input terminal connected to the control unit and output terminals connected to corresponding ones of the switch elements (Q1a-Q1d, Q2a-Q2d, Q3a-Q3d) in a state isolated from the input terminal, and each voltage detection unit (34, 44, 54) is a differential amplifier circuit configured to operate with the operating voltage (Vdd) output from the control power supply unit (16) and including an inverting input terminal (-) connected to one end of the capacitor (C1, C2, C3) via a first voltage divider resistor (R1), a non-inverting input terminal (+) connected to the other end of the capacitor (C1, C2, C3) via a second voltage divider resistor (R2) and connected to a common potential (G1) which is a reference to the operating voltage (Vdd) output from the control power supply unit (16) via a third voltage divider resistor (R3), and an operational amplifier (A) having an output terminal (-) connected to the inverting input terminal via a fourth voltage divider resistor (R4), and outputting a voltage of a level corresponding to a difference between a potential of the inverting input terminal (-) and a potential of the non-inverting input terminal (+).

2. The power conversion apparatus of claim 1, **characterized in that**
the multilevel converters (12u, 12v, 12w) have one-side ends connectable to each grid line (Lu, Lv, Lw) of an AC grid (1), and comprise a neutral point (K) where the other ends of respective multilevel converters (12u, 12v, 12w) are interconnected, and
an end of output of the control power supply unit (16) is connected to the neutral point (K) of the multilevel converters (12u, 12v, 12w).

3. The power conversion apparatus of claim 1 or 2, **characterized in that**
each of the unit converters (21u-23u, 21v-23v, 21w-23w) includes a self-sufficient power supply unit (33, 43, 53) converting the voltage (Vc1, Vc2, Vc3) of the capacitor (C1, C2, C3) into an operating voltage of the drive units (31, 32, 41, 42, 51, 52).

4. The power conversion apparatus of claim 3, **characterized in that**
the self-sufficient power supply unit (33, 43, 53) is a DC-DC converter converting the voltage (Vc1, Vc2, Vc3) of the capacitor (C1, C2, C3) into a predetermined level of DC voltage required for operation of the drive units (31, 32, 41, 42, 51, 52) by switching.

5. The power conversion apparatus of claim 3, **characterized in that**
the self-sufficient power supply unit (33, 43, 53) is a variable resistance circuit converting into a predetermined level DC voltage required for operation of the drive units (31, 32, 41, 42, 51, 52).

6. The power conversion apparatus of claim 1, **characterized in that**
each of the unit converters (21u-23u, 21v-23v, 21w-23w) includes a discharging resistor (36, 46, 56) connected parallel to the capacitor (C1, C2, C3) and having a resistance value smaller than a sum of resistance values of the respective voltage divider resistors (R1, R2).

7. The power conversion apparatus of claim 1, **characterized in that**
the multilevel converters (12u, 12v, 12w) are configured to generate an AC voltage Vcu0, Vcv0, Vcw0) of a waveform similar to a sine wave by summing the output voltages (Vcul-Vcu3, Vcv1-Vcv3, Vcw1-Vcw3) of the respective unit converters (21u-23u, 21v-23v, 21w-23w), and to supply the AC voltage to an AC grid (1), and
the control unit (15) is configured to set an AC voltage command value to cause an AC voltage (Vcu0, Vcv0, Vcw0) having substantially the same waveform as the AC voltage of the AC grid (1) to be generated by the multilevel converters (12u, 12v, 12w), and to generate
a switching drive signal for each of the unit converters (21u-23u, 21v-23v, 21w-23w) by executing pulse width modulation using the AC voltage command value for a plurality of triangular wave-shaped carrier signals whose number is the same as the number in each of the unit converters (21u-23u, 21v-23v, 21w-23w) and are different in phase from each other.

8. The power conversion apparatus of claim 7, **characterized in that**
the control unit (15) is further configured to correct the AC voltage command value to match all detection results of each of the voltage detection units (34, 44, 54) in each of the unit converters.

9. The power conversion apparatus of claim 8, **characterized in that**
the control unit (15) is configiured to take in a detection result of timing at which a triangular wave of each of the carrier signal becomes an apex, of the detection results of each of the voltage detection units (34, 44, 54).

10. The power conversion apparatus of claim 1, **characterized in that**
each of the unit converters (21u-23u, 21v-23v, 21w-23w) is configured to output the plurality of levels DC voltages by selectively forming a first current path which makes an interval between the first and second output terminals (P1, P2, P3, N1, N2, N3) conductive and bypasses the capacitor (C1, C2, C3), a second current path which makes an interval between the first output terminal (P1, P2, P3) and an end of the capacitor (C1, C2, C3) conductive and makes an interval between the second output terminal (N1, N2, N3) and the other end of the capacitor (C1, C2, C3) conductive, and a third current path which makes an interval between the second output terminal and an end of the capacitor conductive and makes an interval between the first output terminal (P1, P2, P3) and the other end of the capacitor (C1, C2, C3) conductive, by the on and off operations of each of the switch elements (Q1a-Q1d, Q2a-Q2d, Q3a-Q3d).

11. The power conversion apparatus of one of claims 1 to 10, **characterized in that**
the multilevel converters (12u, 12v, 12w) are:
a first multilevel converter (12u) serially connecting a plurality of first to N-th unit converters (12u-23u) each configured to selectively output a plurality of levels of DC voltages, to generate an AC voltage (Vcu0) having a waveform similar to a sine wave by summing output voltages (Vcu1, Vcu2, Vcu3) of the first unit converters (21u, 22u, 23u), and to supply the generated voltage (Vcu0) to a U phase of a three-phase AC grid (1);
a second multilevel converter (12v) serially connecting a plurality of second unit converters (12v, 22v, 23v) each configured to selectively output a plurality of levels of DC voltages, to generate an AC voltage (Vcu0) having a waveform similar to a sine wave by summing output voltages (Vcu1, Vcu2, Vcu3) of the second unit converters (21u, 22u, 23u), and supplying the generated voltage (Vcu0) to a V phase of the three-phase AC grid (1); and
a third multilevel converter (12w) serially connecting a plurality of third unit converters (12w, 22w, 23w) each configured to selectively output a plurality of levels of DC voltages, to generate an AC voltage (Vcw0) having a waveform similar to a sine wave by summing output voltages (Vcw1, Vcw2, Vcw3) of the third unit converters (21w, 22w, 23w), and supplying the generated voltage (Vcw0) to a W phase of the three-phase AC grid, and
one-end sides of the respective first, second, and third multilevel converters (12u, 12v, 12w) are connectable to each grid line (Lu, Lv, Lw) of the three-phase AC grid (1) via first, second, and third buffer reactors (11u, 11v, 11w), and the other ends of the respective first, second, and third multilevel converters (12u, 12v, 12w) are interconnected in a star connection

## Patentansprüche

1. Eine Stromumwandlungsvorrichtung, bestehend aus:
Mehrstufenwandlern (12u, 12v, 12w), wobei jeder Mehrstufenwandler (12u, 12v, 12W) mehrere Einheitswandler (21u-23u, 21v-23v, 21w-23w) umfasst, die jeweils so konfiguriert sind, dass sie selektiv mehrere Gleichspannungspegel (Vcu1-Vcu3, Vcv1-Vcv3, Vcw1-Vcw3) ausgeben und die Ausgangsspannungen der Einheitswandler (21u-23u, 21v-23v, 21w-23w) summieren und ausgeben;eine Steuereinheit (15), die so konfiguriert ist, dass sie den Antrieb jedes der Einheitswandler (21u-23u, 21v-23v, 21w-23w) steuert; und
eine Steuerstromversorgungseinheit (16), die so konfiguriert ist, dass sie eine Betriebsspannung (Vdd) der Steuereinheit (15) ausgibt,
wobei jeder der Einheitswandler (21u-23u, 21v-23v, 21w-23w) erste und zweite Ausgangsanschlüsse (P1, P2, P3, N1, N2, N3), eine Vielzahl von Schaltelementen (Q1a-Q1d; Q2a-Q2d, Q3a-Q3d), einen Kondensator (C1, C2, C3), der mit den ersten und zweiten Ausgangsanschlüssen über die Schaltelemente (Q1a-Q1d; Q2a-Q2d, Q3a-Q3d) verbunden ist, Antriebseinheiten (31, 32, 41, 42, 51, 52), die so ausgebildet sind, um mit einer Spannung des Kondensators (C1, C2, C3) zu arbeiten und die Ein- und Ausschaltvorgänge jedes der Schaltelemente (Q1a-Q1d; Q2a-Q2d, Q3a-Q3d) gemäß einem Ansteuersignal von der Steuereinheit (15) anzusteuern, und eine Spannungserfassungseinheit (24, 44, 54), die ausgebildet ist, die Spannung (Vc1, Vc2, Vc3) des Kondensators (C1, C2, C3) zu erfassen, wobei jeder Mehrstufenwandler (21u-23u, 21v-23v, 21w-23w) ausgebildet ist, die mehreren Gleichspannungsstufen durch selektive Bildung mehrerer Strompfade auszugeben, die durch Ein- und Ausschaltvorgänge jedes der Schaltelemente (Q1a-Q1d; Q2a-Q2d, Q3a-Q3d) ausgeführt werden,
wobei die Steuereinheit (15) ausgebildet ist, das Ansteuersignal an die Ansteuereinheit (31, 32, 42, 51, 52) auf der Grundlage eines Erfassungsergebnisses der Spannungserfassungseinheit jedes der Einheitswandler (21u- 23u, 21v-23v, 21w-23w) auszugeben,
**dadurch gekennzeichnet, dass**
jede Antriebseinheit (31, 32, 42, 51, 52) eine isolierte Verstärkerschaltung ist, die einen mit der Steuereinheit verbundenen Eingangsanschluss und Ausgangsanschlüsse umfasst, die mit entsprechenden Schaltelementen (Q1a-Q1d, Q2a-Q2d, Q3a-Q3d) in einem vom Eingangsanschluss isolierten Zustand verbunden sind, und
jede Spannungserfassungseinheit (34, 44, 54) eine Differenzverstärkerschaltung ist, die ausgebildet ist, um mit der von der Steuerstromversorgungseinheit (16) ausgegebenen Betriebsspannung (Vdd) zu arbeiten, und einen invertierenden Eingangsanschluss (-) umfasst, der mit einem Ende des Kondensators (C1, C2, C3) über einen ersten Spannungsteilerwiderstand (R1) verbunden ist, einen nicht-invertierenden Eingangsanschluss (+), der mit dem anderen Ende des Kondensators (C1, C2, C3) über einen zweiten Spannungsteilerwiderstand (R2) verbunden ist und mit einem gemeinsamen Potential (G1) verbunden ist, das eine Referenz zu der Betriebsspannung (Vdd) ausgegeben von der Steuerstromversorgungseinheit (16)über einen dritten Spannungsteilerwiderstand ist, , und ein Operationsverstärker (A) mit einem Ausgangsanschluss (-), der über einen vierten Spannungsteilerwiderstand (R4) mit dem invertierenden Eingangsanschluss verbunden ist und eine Spannung ausgibt, deren Pegel der Differenz zwischen dem Potential des invertierenden Eingangsanschlusses (-) und dem Potential des nichtinvertierenden Eingangsanschlusses (+) entspricht.

2. Die Stromumwandlungsvorrichtung nach Anspruch 1, **dadurch gekennzeichnet, dass**
die Mehrpegelwandler (12u, 12v, 12w) einseitige Enden aufweisen, die mit jeder Netzleitung (Lu, Lv, Lw) eines Wechselstromnetzes (1) verbindbar sind, und einen Neutralpunkt (K) umfassen, an dem die anderen Enden der jeweiligen Mehrpegelwandler (12u, 12v, 12w) miteinander verbunden sind, und
ein Ausgangsende der Steuerstromversorgungseinheit (16) mit dem Neutralpunkt (K) der Mehrstufenwandler (12u, 12v, 12w) verbunden ist.

3. Die Stromumwandlungsvorrichtung nach Anspruch 1 oder 2, **dadurch gekennzeichnet, dass**
jeder der Einheitswandler (21u-23u, 21v-23v, 21w-23w) eine autarke Stromversorgungseinheit (33, 43, 53) umfasst, welche die die Spannung (Vc1, Vc2, Vc3) des Kondensators (C1, C2, C3) in eine Betriebsspannung der Antriebseinheiten (31, 32, 41, 42, 51, 52) umwandelt.

4. Die Stromumwandlungsvorrichtung nach Anspruch 3, **dadurch gekennzeichnet, dass**
die autarke Stromversorgungseinheit (33, 43, 53) ein Gleichstromwandler ist, der die Spannung (Vc1, Vc2, Vc3) des Kondensators (C1, C2, C3) in eine vorbestimmte Gleichspannung umwandelt, die für den Betrieb der Antriebseinheiten (31, 32, 41, 42, 51, 52) durch Schalten erforderlich ist.

5. Die Stromumwandlungsvorrichtung nach Anspruch 3, **dadurch gekennzeichnet, dass**
die autarke Stromversorgungseinheit (33, 43, 53) eine variable Widerstandsschaltung ist, die in eine vorbestimmte Gleichspannung umwandelt, die für den Betrieb der Antriebseinheiten (31, 32, 41, 42, 51, 52) erforderlich ist.

6. Die Stromumwandlungsvorrichtung nach Anspruch 1, **dadurch gekennzeichnet, dass**
jeder der Einheitswandler (21u-23u, 21v-23v, 21w-23w) einen Entladungswiderstand (36, 46, 56) umfasst, der parallel zum Kondensator (C1, C2, C3) geschaltet ist und einen Widerstandswert aufweist, der kleiner ist als die Summe der Widerstandswerte der jeweiligen Spannungsteilerwiderstände (R1, R2).

7. Die Stromumwandlungsvorrichtung nach Anspruch 1, **dadurch gekennzeichnet, dass**
die Mehrstufenwandler (12u, 12v, 12w) so konfiguriert sind, dass sie eine Wechselspannung (Vcu0, Vcv0, Vcw0) mit einer sinusähnlichen Wellenform erzeugen, indem sie die Ausgangsspannungen (Vcu1-Vcu3, Vcv1-Vcv3, Vcw1-Vcw3) der jeweiligen Einheitswandler (21u-23u, 21v-23v, 21w-23w) summieren und die Wechselspannung an ein Wechselstromnetz (1) zu liefern, und
die Steuereinheit (15) konfiguriert ist, einen Wechselspannungs-Befehlswert festzulegen, um eine Wechselspannung (Vcu0, Vcv0, Vcw0) mit im Wesentlichen derselben Wellenform wie die Wechselspannung des Wechselstromnetzes (1) von den Mehrstufenwandlern (12, 12v, 12w) zu erzeugen, und ein Schaltsteuersignal für jeden der Einheitswandler (21u-23u, 21v-23v, 21w-23w) zu erzeugen durch Ausführungen von Pulsweitenmodulation unter Verwendung des Wechselspannungs-Befehlswerts für eine Vielzahl von dreieckförmigen Trägersignalen, deren Anzahl der Anzahl in jedem der Einheitswandler (21u-23u, 21v-23v, 21w-23w) entspricht und die sich in ihrer Phase voneinander unterscheiden.

8. Die Leistungsumwandlungsvorrichtung nach Anspruch 7, **dadurch gekennzeichnet, dass**
die Steuereinheit (15) konfiguriert ist, den Wechselspannungs-Befehlswert zu korrigieren, um ihn an alle Erfassungsergebnisse jeder der Spannungserfassungseinheiten (34, 44, 54) in jedem der Einheitswandler anzupassen.

9. Die Leistungsumwandlungsvorrichtung nach Anspruch 8, **dadurch gekennzeichnet, dass**
die Steuereinheit (15) konfiguriert ist, ein Erfassungsergebnis des Zeitpunkts aufzunehmen, zu dem eine Dreieckwelle jedes Trägersignals einen Scheitelpunkt erreicht, aus den Erfassungsergebnissen jeder der Spannungserfassungseinheiten (34, 44, 54).

10. Die Leistungsumwandlungsvorrichtung nach Anspruch 1, **dadurch gekennzeichnet, dass**
jeder der Einheitenwandler (21u-23u, 21v-23v, 21w-23w) so konfiguriert ist, dass er mehrere Gleichspannungen mit unterschiedlichen Pegeln ausgibt, indem er selektiv einen ersten Strompfad bildet, der einen Abstand zwischen dem ersten und dem zweiten Ausgangsanschluss (P1, P2, P3, N1, N2, N3) leitfähig macht und den Kondensator (C1, C2, C3) umgeht, einen zweiten Strompfad, der einen Abschnitt zwischen dem ersten Ausgangsanschluss (P1, P2, P3) und einem Ende des Kondensators (C1, C2, C3) leitfähig macht und einen Abschnitt zwischen dem zweiten Ausgangsanschluss (N1, N2, N3) und dem anderen Ende des Kondensators (C1, C2, C3) leitfähig macht, und einen dritten Strompfad, der einen Abschnitt zwischen dem zweiten Ausgangsanschluss und einem Ende des Kondensators leitfähig macht und einen Abschnitt zwischen dem ersten Ausgangsanschluss (P1, P2, P3) und dem anderen Ende des Kondensators (C1, C2, C3) leitfähig macht, durch die Ein- und Ausschaltvorgänge jedes der Schaltelemente (Q1a-Q1d, Q2a-Q2d, Q3a-Q3d).

11. Die Leistungsumwandlungsvorrichtung nach einem der Ansprüche 1 bis 10, **dadurch gekennzeichnet, dass**
die Mehrstufenwandler (12u, 12v, 12w) sind:
ein erster Mehrstufenwandler (12u), der eine Vielzahl von ersten bis N-ten Einheitswandlern (12u-23u) in Reihe schaltet, die jeweils ausgebildet, selektiv eine Vielzahl von Gleichspannungspegeln auszugeben, um eine Wechselspannung (Vcu0) mit einer sinusförmigen Wellenform durch Summieren der Ausgangsspannungen (Vcu1, Vcu2, Vcu3) der ersten Einheitswandler (21u, 22u, 23u) zu erzeugen , und die erzeugte Spannung (Vcu0) an eine U-Phase eines dreiphasigen Wechselstromnetzes (1) zu liefern;
ein zweiter Mehrstufenwandler (12v), der mehrere zweite Einheitswandler (12v, 22v, 23v) in Reihe schaltet, die jeweils so konfiguriert sind, dass sie selektiv mehrere Gleichspannungswerte ausgeben, um eine Wechselspannung (Vcu0) mit einer sinusähnlichen Wellenform zu erzeugen, durch Summieren von Ausgangsspannungen (Vcu1, Vcu2, Vcu3) der zweiten Einheitswandler (21u, 22u, 23u) und Liefern der erzeugten Spannung (Vcu0) an eine V-Phase des dreiphasigen Wechselstromnetzes (1); und
einen dritten Mehrstufenwandler (12w), der mehrere dritte Einheitswandler (12w, 22w, 23w) seriell verbindet, die jeweils so konfiguriert sind, dass sie selektiv mehrere Gleichspannungspegel ausgeben, Erzeugen einer Wechselspannung (Vcw0) mit einer sinusförmigen Wellenform durch Summieren von Ausgangsspannungen (Vcw1, Vcw2, Vcw3) der dritten Einheitswandler (21w, 22w, 23w) und Liefern der erzeugten Spannung (Vcw0) an eine W-Phase des dreiphasigen Wechselstromnetzes, und
die einen Enden der jeweiligen ersten, zweiten und dritten Mehrstufenwandler (12u, 12v, 12w) verbindbar sind mit jeder Netzleitung (Lu, Lv, Lw) des dreiphasigen Wechselstromnetzes (1) über erste, zweite und dritte Pufferreaktoren (11u, 11v, 11w), und die anderen Enden des jeweiligen ersten, zweiten und dritten Mehrstufenwandler (12u, 12v, 12w) in einer Sternschaltung miteinander verbunden sind.

## Revendications

1. Appareil de conversion de puissance, comprenant :
des convertisseurs multiniveaux (12u, 12v, 12w), chaque convertisseur multiniveau (12u, 12v, 12w) comprenant une pluralité de convertisseurs unitaires (21u-23u, 21v-23v, 21w-23w), chacun configuré pour fournir en sortie de manière sélective une pluralité de niveaux de tensions continues (Vcu1-Vcu3, Vcv1-Vcv3, Vcw1-Vcw3), et pour sommer et fournir en sortie des tensions de sortie des convertisseurs unitaires (21u-23u, 21v-23v, 21w-23w) ;
une unité de commande (15) configurée pour commander l'entraînement de chacun des convertisseurs unitaires (21u-23u, 21v-23v, 21w-23w) ; et
une unité d'alimentation électrique de commande (16) configurée pour fournir en sortie une tension de fonctionnement (Vdd) de l'unité de commande (15),
chacun des convertisseurs unitaires (21u-23u, 21v-23v, 21w-23w) comprenant une première et une deuxième bornes de sortie (P1, P2, P3, N1, N2, N3), une pluralité d'éléments de commutation (Q1a-Q1d ; Q2a-Q2d, Q3a-Q3d), un condensateur (C1, C2, C3) connecté à la première et la deuxième bornes de sortie (P1, P2, P3, N1, N2, N3) par l'intermédiaire des éléments de commutation (Q1a-Q1d ; Q2a-Q2d, Q3a-Q3d), des unités d'entraînement (31, 32, 41, 42, 51, 52) configurées pour fonctionner avec une tension du condensateur (C1, C2, C3) et pour entraîner des opérations d'activation et de désactivation de chacun des éléments de commutation (Q1a-Q1d ; Q2a-Q2d, Q3a-Q3d) conformément à un signal d'entraînement provenant de l'unité de commande (15), et une unité de détection de tension (24, 44, 54) configurée pour détecter la tension (Vc1, Vc2, Vc3) du condensateur (C1, C2, C3), chaque convertisseur multiniveau (21u-23u, 21v-23v, 21w-23w) étant configuré pour fournir en sortie la pluralité de niveaux de tensions continues par la formation sélective d'une pluralité de chemins de courant exécutée par les opérations d'activation et de désactivation de chacun des éléments de commutation (Q1a-Q1d ; Q2a-Q2d, Q3a-Q3d),
l'unité de commande (15) est configurée pour fournir en sortie le signal d'entraînement à l'unité d'entraînement (31, 32, 42, 51, 52), sur la base d'un résultat de détection de l'unité de détection de tension de chacun des convertisseurs unitaires (21u-23u, 21v-23v, 21w-23w),
**caractérisé en ce que**
chaque unité d'entraînement (31, 32, 42, 51, 52) est un circuit amplificateur isolé comprenant une borne d'entrée connectée à l'unité de commande et des bornes de sortie connectées à des éléments correspondants des éléments de commutation (Q1a-Q1d, Q2a-Q2d, Q3a-Q3d) dans un état isolé de la borne d'entrée, et
chaque unité de détection de tension (34, 44, 54) est un circuit d'amplificateur différentiel configuré pour fonctionner avec la tension de fonctionnement (Vdd) fournie en sortie par l'unité d'alimentation électrique de commande (16) et comprenant une borne d'entrée inverseuse (-) connectée à une extrémité du condensateur (C1, C2, C3) par l'intermédiaire d'une première résistance de réduction de tension (R1), une borne d'entrée non inverseuse (+) connectée à l'autre extrémité du condensateur (C1, C2, C3) par l'intermédiaire d'une deuxième résistance de réduction de tension (R2) et connectée à un potentiel commun (G1) qui est une référence à la tension de fonctionnement (Vdd) fournie en sortie par l'unité d'alimentation électrique de commande (16) par l'intermédiaire d'une troisième résistance de réduction de tension (R3), et un amplificateur opérationnel (A) ayant une borne de sortie (-) connectée à la borne d'entrée inverseuse par l'intermédiaire d'une quatrième résistance de réduction de tension (R4), et fournissant en sortie une tension d'un niveau correspondant à une différence entre un potentiel de la borne d'entrée inverseuse (-) et un potentiel de la borne d'entrée non inverseuse (+).

2. Appareil de conversion de puissance selon la revendication 1, **caractérisé en ce que**
les convertisseurs multiniveaux (12u, 12v, 12w) ont des extrémités d'un côté pouvant être connectées à chaque ligne de réseau (Lu, Lv, Lw) d'un réseau CA (1), et comprennent un point neutre (K) où les autres extrémités des convertisseurs multiniveaux respectifs (12u, 12v, 12w) sont interconnectées, et une extrémité de sortie de l'unité d'alimentation électrique de commande (16) est connectée au point neutre (K) des convertisseurs multiniveaux (12u, 12v, 12w).

3. Appareil de conversion de puissance selon la revendication 1 ou 2, **caractérisé en ce que**
chacun des convertisseurs unitaires (21u-23u, 21v-23v, 21w-23w) comprend une unité d'alimentation électrique autosuffisante (33, 43, 53) convertissant la tension (Vc1, Vc2, Vc3) du condensateur (C1, C2, C3) en une tension de fonctionnement des unités d'entraînement (31, 32, 41, 42, 51, 52).

4. Appareil de conversion de puissance selon la revendication 3, **caractérisé en ce que**
l'unité d'alimentation électrique autosuffisante (33, 43, 53) est un convertisseur continu-continu convertissant la tension (Vc1, Vc2, Vc3) du condensateur (C1, C2, C3) en un niveau prédéterminé de tension continue nécessaire au fonctionnement des unités d'entraînement (31, 32, 41, 42, 51, 52) par commutation.

5. Appareil de conversion de puissance selon la revendication 3, **caractérisé en ce que**
l'unité d'alimentation électrique autosuffisante (33, 43, 53) est un circuit à résistance variable convertissant la tension en un niveau prédéterminé de tension continue nécessaire au fonctionnement des unités d'entraînement (31, 32, 41, 42, 51, 52).

6. Appareil de conversion de puissance selon la revendication 1, **caractérisé en ce que**
chacun des convertisseurs unitaires (21u-23u, 21v-23v, 21w-23w) comprend une résistance de décharge (36, 46, 56) connectée en parallèle au condensateur (C1, C2, C3) et ayant une valeur de résistance électrique inférieure à la somme des valeurs de résistance électrique des résistances de réduction de tension respectives (R1, R2).

7. Appareil de conversion de puissance selon la revendication 1, **caractérisé en ce que**
les convertisseurs multiniveaux (12u, 12v, 12w) sont configurés pour générer une tension alternative (Vcu0, Vcv0, Vcw0) d'une forme d'onde similaire à une onde sinusoïdale en sommant les tensions de sortie (Vcu1-Vcu3, Vcv1-Vcv3, Vcw1-Vcw3) des convertisseurs unitaires respectifs (21u-23u, 21v-23v, 21w-23w), et pour fournir la tension alternative à un réseau CA (1), et
l'unité de commande (15) est configurée pour définir une valeur d'instruction de tension alternative afin d'amener une tension alternative (Vcu0, Vcv0, Vcw0) ayant sensiblement la même forme d'onde que la tension alternative du réseau CA (1) à être générée par les convertisseurs multiniveaux (12u, 12v, 12w), et pour générer un signal d'entraînement de commutation pour chacun des convertisseurs unitaires (21u-23u, 21v-23v, 21w-23w) en exécutant une modulation d'impulsion en durée à l'aide de la valeur d'instruction de tension alternative pour une pluralité de signaux de porteuse en forme d'onde triangulaire dont le nombre est le même que le nombre dans chacun des convertisseurs unitaires (21u-23u, 21v-23v, 21w-23w) et qui sont différents en phase les uns des autres.

8. Appareil de conversion de puissance selon la revendication 7, **caractérisé en ce que**
l'unité de commande (15) est en outre configurée pour corriger la valeur d'instruction de tension alternative afin de faire correspondre tous les résultats de détection de chacune des unités de détection de tension (34, 44, 54) dans chacun des convertisseurs unitaires.

9. Appareil de conversion de puissance selon la revendication 8, **caractérisé en ce que**
l'unité de commande (15) est configurée pour prendre en entrée un résultat de détection d'une temporisation à laquelle une onde triangulaire de chacun des signaux de porteuse atteint un sommet, parmi les résultats de détection de chacune des unités de détection de tension (34, 44, 54).

10. Appareil de conversion de puissance selon la revendication 1, **caractérisé en ce que**
chacun des convertisseurs unitaires (21u-23u, 21v-23v, 21w-23w) est configuré pour fournir en sortie la pluralité de niveaux de tensions continues en formant de manière sélective un premier chemin de courant qui rend conducteur un intervalle entre la première et la deuxième bornes de sortie (P1, P2, P3, N1, N2, N3) et qui contourne le condensateur (C1, C2, C3), un deuxième chemin de courant qui rend conducteur un intervalle entre la première borne de sortie (P1, P2, P3) et une extrémité du condensateur (C1, C2, C3) et qui rend conducteur un intervalle entre la deuxième borne de sortie (N1, N2, N3) et l'autre extrémité du condensateur (C1, C2, C3), et un troisième chemin de courant qui rend conducteur un intervalle entre la deuxième borne de sortie et une extrémité du condensateur et qui rend conducteur un intervalle entre la première borne de sortie (P1, P2, P3) et l'autre extrémité du condensateur (C1, C2, C3), par le biais des opérations d'activation et de désactivation de chacun des éléments de commutation (Q1a-Q1d, Q2a-Q2d, Q3a-Q3d).

11. Appareil de conversion de puissance selon l'une quelconque des revendications 1 à 10, **caractérisé en ce que**
les convertisseurs multiniveaux (12u, 12v, 12w) sont :
un premier convertisseur multiniveau (12u) connectant en série une pluralité de premier à N-ième convertisseurs unitaires (12u-23u) chacun configuré pour fournir en sortie de manière sélective une pluralité de niveaux de tensions continues, pour générer une tension alternative (Vcu0) ayant une forme d'onde similaire à une onde sinusoïdale en sommant les tensions de sortie (Vcu1, Vcu2, Vcu3) des premiers convertisseurs unitaires (21u, 22u, 23u) et pour fournir la tension générée (Vcu0) à une phase U d'un réseau CA triphasé (1) ;
un deuxième convertisseur multiniveau (12v) connectant en série une pluralité de deuxièmes convertisseurs unitaires (12v, 22v, 23v) chacun configuré pour fournir en sortie de manière sélective une pluralité de niveaux de tensions continues, pour générer une tension alternative (Vcu0) ayant une forme d'onde similaire à une onde sinusoïdale en sommant les tensions de sortie (Vcu1, Vcu2, Vcu3) des deuxièmes convertisseurs unitaires (21u, 22u, 23u), et pour fournir la tension générée (Vcu0) à une phase V du réseau CA triphasé (1) ; et
un troisième convertisseur multiniveau (12w) connectant en série une pluralité de troisièmes convertisseurs unitaires (12w, 22w, 23w) chacun configuré pour fournir en sortie de manière sélective une pluralité de niveaux de tensions continues, pour générer une tension alternative (Vcw0) ayant une forme d'onde similaire à une onde sinusoïdale en sommant les tensions de sortie (Vcw1, Vcw2, Vcw3) des troisièmes convertisseurs unitaires (21w, 22w, 23w), et pour fournir la tension générée (Vcw0) à une phase W du réseau CA triphasé, et
les extrémités d'un côté des premier, deuxième et troisième convertisseurs multiniveaux respectifs (12u, 12v, 12w) peuvent être connectées à chaque ligne de réseau (Lu, Lv, Lw) du réseau CA triphasé (1) par l'intermédiaire de première, deuxième et troisième réactances tampons (11u, 11v, 11w), et les autres extrémités des premier, deuxième et troisième convertisseurs multiniveaux respectifs (12u, 12v, 12w) sont interconnectées dans une connexion en étoile.
